# EUROPÄISCHE PATENTSCHRIFT

(11) **EP 0 565 963 B1**
(45) Veröffentlichungstag und Bekanntmachung des Hinweises auf die Patenterteilung: **05.07.1995**
(21) Anmeldenummer: 93105437.3
(22) Anmeldetag: 01.04.1993
(51) Int. Cl.: B60P 1/44

(54) **Ladebordwand für ein Fahrzeug und Verfahren zu ihrer Herstellung**
Loading tailgate for a vehicle and procedure for its manufacture
Hayon élévateur pour un véhicule et procédé pour sa fabrication

(30) Priorität: 16.04.1992 DE 4212866
(43) Veröffentlichungstag der Anmeldung: 20.10.1993
(73) Patentinhaber: Austria Metall Aktiengesellschaft, A-5282 Braunau am Inn (AT)
(72) Erfinder: Falk, Friedrich, A-5282 Braunau (AT); Nandlinger, Ferdinand, A-5280 Braunau (AT)
(74) Vertreter: WILHELMS, KILIAN & PARTNER Patentanwälte

(56) Entgegenhaltungen:
- EP-A- 0 081 115
- FR-A- 2 575 709

## Beschreibung

Die Erfindung betrifft eine Ladebordwand für ein Fahrzeug mit einer Plattform aus einer Anzahl von senkrecht zur Schwenkachse der Bordwand verlaufenden und miteinander verbundenen Profilen und einem Torsionskastenprofil, das an einer Kante der Plattform angeordnet und mit den Profilen verbunden ist, entsprechend dem Oberbegriff des Anspruchs 1, sowie ein Verfahren zum Herstellen einer derartigen Ladebordwand entsprechend dem Oberbegriff des Anspruchs 4 (siehe z.B. FR-A-2 575 709).

Es sind Ladebordwände für Fahrzeuge bekannt, bei denen die Profile zur Bildung der Plattform parallel zur Schwenkachse, d.h. quer und somit senkrecht zur Fahrtrichtung des Fahrzeugs angeordnet sind. Ein Beispiel einer derartigen Ladebordwand, bei der die Plattform aus quer liegenden Aluminiumprofilen gebildet ist und mit verstärkenden Elementen in Längsrichtung, d.h. parallel zur Fahrtrichtung im ausgeklappten Zustand der Ladebordwand versehen ist, ist aus der EP 0 273 865 A2 bekannt.

Da Ladebordwände bei einer Belastung im Bereich des Torsionskastenprofiles einer starken Drehmomentbeanspruchung um die querliegende Achse ausgesetzt sind, ergeben sich starke Längszugspannungen an der Oberseite der Plattform und starke Längsdruckspannungen an der Unterseite der Plattform. Um zu vermeiden, daß diese Spannungen übermäßig groß werden, d.h. zur Erhöhung der Momentanbelastbarkeit, ist es erforderlich, die Plattform zum Torsionskastenprofil hin keilförmig zu erweitern.

Bei den bekannten Ladebordwänden mit parallel zur Schwenkachse, d.h. quer liegenden Profilen, werden verschieden starke Profile mit zum Teil keilförmiger Querschnittsform zu der gewünschten Keilform der Plattform zusammengesetzt. Das bedeutet jedoch, daß zum Aufbau einer derartigen Ladebordwand eine große Anzahl von Profilen mit verschiedenen Querschnittsformen benötigt wird.

Da darüber hinaus die stärksten mechanischen Spannungen quer zu der Längsrichtung der parallel zur Schwenkachse angeordneten Profile auftritt und strangpreßtechnisch nur Profile mit begrenzter Abmessung in Querrichtung hergestellt werden können, müssen diese Spannungen über viele Profilverbindungen, beispielsweise über Schweißnähte mit geringer Festigkeit in der Wärmeeinflußzone oder Schnappverbindungen übertragen werden.

Ladebordwände mit querliegenden Profilen haben daher den Nachteil einer aufwendigen Herstellung aus einer großen Anzahl verschiedener Bauelemente und einer nur schwer zu erreichenden Festigkeit in Längsrichtung, d.h. parallel zur Fahrtrichtung und somit quer zu den Profilen.

Es ist auch bereits eine Ladebordwand der eingangs genannten Art vorgeschlagen worden, bei der die Plattform aus längs, d.h. parallel zur Fahrtrichtung und somit senkrecht zur Schwenkachse der Bordwand verlaufenden Aluminiumprofilen gebildet ist, die beispielsweise über Schnappverbindungen miteinander verbunden sind, wobei zusätzliche Bauteile zur Verbesserung der Steifigkeit vorgesehen sind. Bei einer derartigen Ladebordwand kann die Keilform der Plattform nur durch zusätzliche Bauelemente wie beispielsweise Stützbleche erreicht werden, die an der Unterseite der Profile und schräg zu deren Längsrichtung vorgesehen sind.

Eine Ladebordwand mit längsgelegten Profilen hat somit den Nachteil, daß zusätzliche Konstruktionselemente wie beispielsweise Stützbleche erforderlich sind, was mindestens eine zusätzliche Schweißnaht erforderlich macht, die festigungsvermindernd wirkt. Darüber hinaus sind diese zusätzlichen verstärkenden Bauelemente optisch störend.

Die der Erfindung zugrundeliegende Aufgabe besteht daher darin, eine Ladebordwand für ein Fahrzeug der eingangs genannten Art zu schaffen, die eine hohe Festigkeit ohne zusätzliche Bauelemente hat.

Die erfindungsgemäße Ladebordwand soll darüber hinaus mit geringen Kosten und einfach zu fertigen und optisch gefällig sein.

Diese Aufgabe wird gemäß der Erfindung dadurch gelöst, daß bei einer Ladebordwand der eingangs genannten Art die Profile, die die Plattform bilden, im an das Torsionskastenprofil angrenzenden Bereich in Profillängsrichtung aufgeschnitten und aufgebogen sind, wobei die Enden der aufgebogenen Teile der Profile mit dem Torsionskastenprofil verbunden sind.

Vorzugsweise sind die Profile mit jeweils zwei parallelen längsverlaufenden Verstärkungsstegen versehen, zwischen denen die Schnittebene verläuft.

Die Profile können insbesondere über Schnappverbindungen miteinander verbunden sein.

Bei dem erfindungsgemäßen Verfahren entsprechend Anspruch 4 werden zum Herstellen einer Ladebordwand der beschriebenen Art die Profile zur Bildung der Plattform nebeneinander angeordnet und miteinander verbunden; anschließend werden die Profile in dem Bereich, der an das später anzubringende Torsionskastenprofil angrenzt, gemeinsam aufgeschnitten und gemeinsam aufgebogen und die aufgebogenen Enden der Profile mit dem Torsionskastenprofil verbunden.

Im folgenden wird anhand der zugehörigen Zeichnung ein besonders bevorzugtes Ausführungsbeispiel der Erfindung näher beschrieben. Es zeigen
Fig. 1 eine perspektivische Gesamtansicht des Ausführungsbeispiels der erfindungsgemäßen Ladebordwand,
Fig. 2, 3 und 4 in vertikalen Längsschnittansichten der Plattform verschiedene Stadien während des Fertigungsprozesses und
Fig. 5 eine Schnittansicht des Körpers, der sich nach dem Zusammenschnappen der Profile zur Bildung der Plattform ergibt, wobei die Zeichenebene senkrecht auf der Profilrichtung steht.

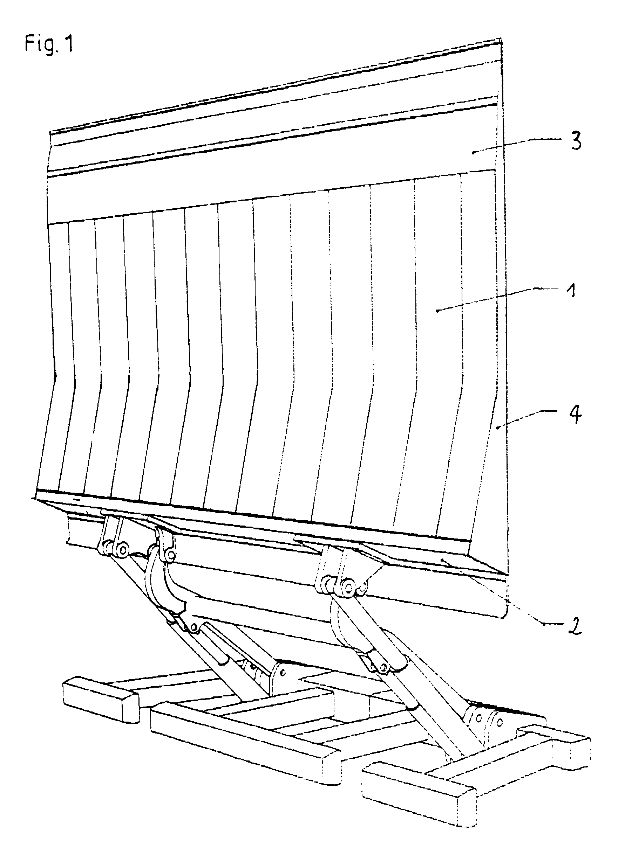

Wie es in der Zeichnung und insbesondere in Fig. 1 dargestellt ist, besteht eine Ladeplattform im wesentlichen aus einer Plattform 1 aus längs, d.h. parallel zur Fahrzeugrichtung und senkrecht zur Schwenkachse verlaufenden Profilen sowie einem Torsionskastenprofil 2, das an einer Kante der Plattform 1 angeordnet und mit den die Plattform bildenden Profilen verbunden ist.

Gemäß Fig. 1 können weiterhin ein Zungenprofil 3 an der dem Torsionskastenprofil 2 gegenüberliegenden Kante der Plattform 1 sowie seitliche Abdeckbleche 4 vorgesehen sein.

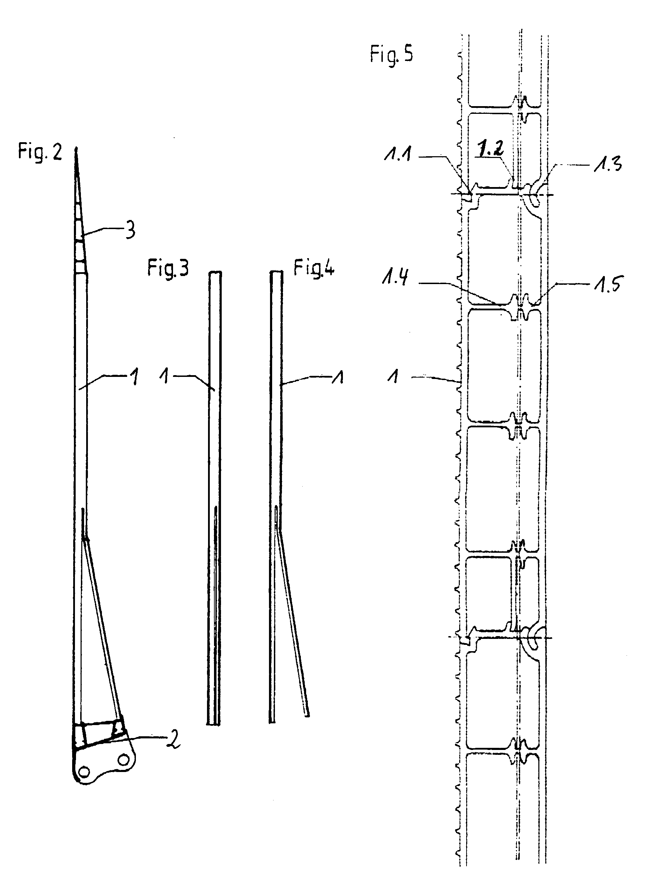

Wie es schematisch in Fig. 2 dargestellt ist, sind zur Bildung der gewünschten Keilform wenigstens im Bereich, der an das Torsionskastenprofil 2 angrenzt, die Profile der Plattform 1 in Profillängsrichtung parallel zur Ebene der Plattform aufgeschnitten und senkrecht dazu aufgebogen. Die Enden der aufgebogenen Teile der Profile sind mit dem Torsionskastenprofil 2 verbunden.

Bei der Herstellung einer derartigen Ladeplattform werden die die Plattform 1 bildenden Profile nebeneinander angeordnet und beispielsweise über eine Schnappverbindung miteinander verbunden. Gemäß Fig. 3 werden die Profile in dem gewünschten Bereich anschließend gemeinsam aufgeschnitten und gemäß Fig. 4 aufgebogen. Danach werden das Torsionskastenprofil 2 und ggfs. das Zungenprofil 3 sowie schließlich die seitlichen Abdeckbleche zur Fertigstellung der Ladebordwand angebracht.

Wie es in Fig. 5 dargestellt ist, können die Profile in Längsrichtung neben den Schnappverbindungen 1.1 bis 1.3 zur Verbindung der Profile in Längsrichtung miteinander mit in Längsrichtung ausgebildeten Paaren von Verstärkungsstegen 1.4 und 1.5 versehen sein, die so angeordnet sind, daß zwischen ihnen die Schnittebene verläuft. Die Verstärkungsstege 1.4 und 1.5 erhöhen die Steifigkeit der Konstruktion und erleichtern die Schnittführung.

Die erfindungsgemäße Ladebordwand mit dem oben beschriebenen Aufbau hat den Vorteil, daß sie ohne Schweißnähte auskommt, wobei die mechanischen Spannungen in der Plattform, die parallel zur Längsrichtung der die Plattform bildenden Profile verlaufen, über keine oder nur wenige Verbindungsstellen von Profilen übertragen werden müssen.

Die erfindungsgemäße Ladebordwand hat den weiteren Vorteil, daß ihre Konstruktion optisch ansprechend ist, wobei als Werkstoff Aluminium verwandt werden kann, dessen Verformbarkeit dazu ausgenützt wird, Nachteile, die sich aus den Schweißbarkeitseigenschaften ergeben, zu vermeiden.

## Patentansprüche

1. Ladebordwand für ein Fahrzeug mit
einer Plattform (1) aus einer Anzahl von senkrecht zur Schwenkachse der Ladebordwand verlaufenden und miteinander verbundenen Profilen und
einem Torsionskastenprofil (2), das an einer Kante der Plattform (1) angebracht und mit den Profilen verbunden ist, dadurch gekennzeichnet, daß die Profile, die die Plattform (1) bilden, im an das Torsionskastenprofil (2) angrenzenden Bereich in Profillängsrichtung aufgeschnitten und aufgebogen sind, wobei die Enden der aufgebogenen Teile der Profile mit dem Torsionskastenprofil (2) verbunden sind.

2. Ladebordwand nach Anspruch 1, dadurch gekennzeichnet, daß die Profile mit jeweils zwei paralleln längsverlaufenden Verstärkungsstegen (1.4, 1.5) versehen sind, zwischen den die Schnittebene verläuft.

3. Ladebordwand nach Anspruch 1 oder 2, dadurch gekennzeichnet, daß die die Plattform (1) bildenden Profile über Schnappverbindungen (1.1, 1.2, 1.3) miteinander verbunden sind.

4. Verfahren zum Herstellen einer Ladebordwand für ein Fahrzeug mit einer Plattform (1) aus einer Anzahl von senkrecht zur Schwenkachse der Ladebordwand verlaufenden Profilen und einem an einer Kante der Plattform (1) angebrachten Torsionskastenprofil (2), wobei die Profile zur Bildung der Plattform nebeneinander angeordnet und miteinander verbunden werden, dadurch gekennzeichnet, daß die miteinander verbundenen Profile in dem Bereich, der an das später anzubringende Torsionskastenprofil (2) angrenzt, gemeinsam aufgeschnitten und gemeinsam aufgebogen werden und die aufgebogenen Enden der Profile mit dem Torsionskastenprofil (2) verbunden werden.

## Claims

1. Loading tailgate for a vehicle with
a platform (1) composed of a number of profiles extending perpendicularly to the swivelling axis of the loading tailgate and connected to one another, and
a torsional box profile (2), mounted at an edge of the platform (1) and connected to the profiles, characterized in that the profiles forming the platform (1) are cut open and bent up in longitudinal direction of the profile in the area adjacent to the torsional box profile (2), the ends of the bent up parts of the profiles being connected with the torsional box profile (2).

2. Loading tailgate according to claim 1, characterized in that the profiles are provided with respectively two parallel longitudinally extending stiffening webs (1.4, 1.5) between which the cutting plane extends.

3. Loading tailgate according to claim 1 or 2, characterized in that the profiles forming the platform (1) are connected to one another via catch-connections (1.1, 1.2, 1.3).

4. Method for manufacturing a loading tailgate for a vehicle with a platform (1) composed of a number of profiles extending perpendicularly to the swivelling axis of the loading tailgate and a torsional box profile (2) mounted at an edge of the platform (1), the profiles being arranged next to one another and connected to one another to form the platform, characterized in that in the area adjacent to the torsional box profile later to be mounted, the profiles are cut open and bent up together, and the bent up ends of the profiles are connected with the torsional box profile (2).

## Revendications

1. Hayon élévateur pour véhicule, comportant une plate-forme (1) constituée d'une série de profilés reliés entre eux et s'étendant perpendiculairement à l'axe de basculement du hayon élévateur, et un profilé (2) en caisson de torsion rapporté à une arête de la plate-forme (1) et relié aux profilés, caractérisé en ce que les profilés, qui constituent la plate-forme (1), sont découpés et pliés dans la direction longitudinale des profilés et dans la zone délimitée par le profilé (2) en caisson de torsion, et les extrémités des parties pliées des profilés sont reliées au profilé (2) en caisson de torsion.

2. Hayon selon la revendication 1, caractérisé en ce que les profilés sont chacun pourvus de deux jambes de renforcement parallèles (1.4, 1.5), entre lesquelles passe le plan de coupe.

3. Hayon selon l'une des revendications 1 et 2, caractérisé en ce que les profilés constituant la plate-forme (1) sont reliés entre eux par des liaisons encliquetables (1.1, 1.2, 1.3).

4. Procédé pour la fabrication d'un hayon élévateur pour un véhicule, comportant une plate-forme (1) formée d'une série de profilés perpendiculaires à l'axe de basculement du hayon, ainsi qu'un profilé (2) en caisson de torsion rapporté à une arête de la plate-forme (1), dans Lequel les profilés pour la formation de la plate-forme sont disposés les uns à côté des autres et reliés entre eux caractérisé en ce que les profilés sont pliés ensemble et découpés ensemble dans la zone attenante au profilé (2) en caisson de torsion qui doit être fixé ultérieurement, et en ce que les extrémités pliées des profilés sont reliées au profilé (2) en caisson de torsion.
